# EUROPEAN PATENT APPLICATION

(11) **EP 4 319 340 A1**
(43) Date of publication of application: **07.02.2024**
(21) Application number: 22778956.7
(22) Date of filing: 29.03.2022
(51) Int. Cl.: H04W 64/00

(54) **METHOD AND APPARATUS FOR DETERMINING PRS CONFIGURATION INFORMATION**

(30) Priority: 02.04.2021 CN 202110360523
(71) Applicant: Datang Mobile Communications Equipment Co., Ltd., Beijing 100085 (CN)
(72) Inventor: ZHANG, Dajun, Beijing 100085 (CN); LI, Jianxiang, Beijing 100085 (CN); ZHANG, Bufang, Beijing 100085 (CN); QUAN, Haiyang, Beijing 100085 (CN); FU, Jing, Beijing 100085 (CN)
(74) Representative: Cabinet Nony
(86) International application number: PCT/CN2022/083763
(87) International publication number: WO 2022/206774

(57) **Abstract**

Disclosed in the present application are a method and apparatus for determining PRS configuration information, which are used for implementing, in combination with preconfigured available PRS configuration information, a dynamic request for a PRS configuration, thereby improving the network efficiency and ensuring positioning accuracy. The method for determining PRS configuration information provided in the present application comprises: determining a positioning service requirement (S101); and according to the positioning service requirement, and on the basis of preset available PRS configuration information, determining PRS configuration information for a PRS resource allocation object (S102).

## Description

### Cross Reference to Related Application

This application claims the priority to Chinese Patent Application No. 202110360523.7, filed with the China National Intellectual Property Administration on April 02, 2021 and entitled "Method and Apparatus for Determining PRS Configuration Information", which is hereby incorporated by reference in its entirety.

### Technical Field

The present application relates to the technical field of communication technologies, and in particular to a method and apparatus for determining PRS configuration information.

### Background

The positioning technology related to downlink radio access technology (RAT) is mainly based on downlink positioning reference signal (DL-PRS) for measurement, and calculates and obtains corresponding position information according to measurement results.

However, even if there is currently no positioning service or there is DL-PRS that is not used by a terminal, each transmission point (TRP) of a base station will still transmit all DL-PRS signals preconfigured by each TRP. In this case, positioning reference signal (PRS) resources are wasted. In addition, when configuring the PRS, the TRP of the base station configures the PRS based on each cell, which was found in the research to have the problem of insufficient positioning accuracy of UE, and even leading to positioning failure.

### Summary

Embodiments of the present application provide a method and apparatus for determining PRS configuration information, for implementing a dynamic request for PRS configuration in combination with preconfigured available PRS configuration information, thereby improving network efficiency and ensuring positioning accuracy.

At a LMF side, embodiments of the present application provide a method for determining positioning reference signal (PRS) configuration information, the method including:
determining a positioning service requirement; and
determining PRS configuration information for a PRS resource allocation object based on preset available PRS configuration information according to the positioning service requirement.

Through this method, the positioning service requirement is determined, and the PRS configuration information is determined for the PRS resource allocation object based on the preset available PRS configuration information according to the positioning service requirement, to realize a dynamic request for PRS configuration in combination with preconfigured available PRS configuration information, thereby improving network efficiency and ensuring positioning accuracy.

Optionally, the PRS resource allocation object is a user equipment (UE), and the PRS configuration information includes one or more of following information:
an identifier (ID) of bandwidth part (BWP) corresponding to a dynamically configured downlink positioning reference signal (DL-PRS) resource;
an ID of a positioning frequency layer corresponding to the dynamically configured DL-PRS resource;
an ID of a base station corresponding to the dynamically configured DL-PRS resource;
an ID of a transmission point (TRP) corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource periods;
a set of muting patterns of the dynamically configured DL-PRS resource.

Optionally, the PRS resource allocation object is a cell or a TRP, and the PRS configuration information includes one or more of following information:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS.

Optionally, in a case that a positioning request message sent by a access and mobility management function (AMF) entity to a location management function entity (LMF) includes priority information of a UE, the determining the PRS configuration information for the PRS resource allocation object includes:
determining the PRS configuration information for the PRS resource allocation object according to the priority information.

Optionally, the PRS resource allocation object is a cell or a TRP, a PRS configuration resource is configured or changed for a cell or a TRP associated with per UE, and PRS configuration information for each UE of the cell or the TRP is determined and is notified to a base station through a message.

Optionally, the message includes one or more of following information:
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or a changed DL-PRS resource set, or a deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource;
priority information of the UE.

Optionally, the method further includes: notifying the PRS configuration information determined for the PRS resource allocation object to a base station.

Optionally, the method further includes:
when a feedback message received from the base station includes information that PRS resources are configured successfully or part of the PSR resources are configured successfully, selecting PRS configuration information or PRS change information for a UE from successfully configured PRS resources according to the information that the PRS resources are configured successfully or the part of the PSR resources are configured successfully; and
when the feedback message received from the base station includes information that the PRS resources fail to be configured, selecting the PRS configuration information or the PRS change information for the UE from other actually available PRS resources, or reselecting a positioning method.

At a base station side, embodiments of the present application provide a method for determining positioning reference signal (PRS) configuration information, the method including:
receiving a message sent by a location management function (LMF); and
obtaining PRS configuration information from the message; the PRS configuration information is determined by the LMF for a PRS resource allocation object based on preset available PRS configuration information.

Optionally, the method further includes:
completing a corresponding resource configuration based on the PRS configuration information obtained from the message, and sending a feedback message to the LMF; the feedback message includes a configuration result of the resource configuration.

Optionally, the method further includes: sending configurable PRS resource information in a cell or a TRP to the LMF.

At a terminal side, embodiments of the present application provides a method for determining positioning reference signal (PRS) configuration information, the method including:
determining auxiliary information; the auxiliary information is configured to assist a location management function (LMF) to determine PRS configuration information for a PRS resource allocation object based on preset available PRS configuration information; and
reporting the auxiliary information to the LMF.

Optionally, the auxiliary information includes one or more of following information:
a channel quality indication (CQI);
non line of sight (NLOS) related information;
a synchronization signal and physical broadcast channel block index (SSB index).

At the LMF side, embodiments of the present application provide an apparatus for determining positioning reference signal (PRS) configuration information, the apparatus including:
a memory, configured to store program instructions; and
a processor, configured to invoke the program instructions stored in the memory, and perform according to an obtained program:
   determining a positioning service requirement; and
   determining PRS configuration information for a PRS resource allocation object based on preset available PRS configuration information according to the positioning service requirement.

Optionally, the PRS resource allocation object is a user equipment (UE), and the PRS configuration information includes one or more of following information:
an identifier (ID) of bandwidth part (BWP) corresponding to a dynamically configured downlink positioning reference signal (DL-PRS) resource;
an ID of a positioning frequency layer corresponding to the dynamically configured DL-PRS resource;
an ID of a base station corresponding to the dynamically configured DL-PRS resource;
an ID of a transmission point (TRP) corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource period;
a set of muting patterns of the dynamically configured DL-PRS resource.

Optionally, the PRS resource allocation object is a cell or a TRP, and the PRS configuration information includes one or more of following information:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS.

Optionally, in a case that a positioning request message sent by an access and mobility management function (AMF) entity to a location management function (LMF) includes priority information of a UE, the determining the PRS configuration information for the PRS resource allocation object includes:
determining the PRS configuration information for the PRS resource allocation object according to the priority information.

Optionally, the PRS resource allocation object is a cell or a TRP, a PRS configuration resource is configured or changed for a cell or a TRP associated with per UE, and PRS configuration information of each UE is determined and is notified to a base station through a message.

Optionally, the message includes one or more of following information:
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or a changed DL-PRS resource set, or a deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource;
priority information of the UE.

Optionally, the processor is further configured to: notify the PRS configuration information determined for the PRS resource allocation object to a base station.

Optionally, the processor is further configured to:
when a feedback message received from the base station includes information that PRS resources are configured successfully or part of the PSR resources are configured successfully, select PRS configuration information or PRS change information for a UE from successfully configured PRS resources according to the information that the PRS resources are configured successfully or part of the PSR resources are configured successfully; and
when the feedback message received from the base station includes information that the PRS resources fail to be configured, select the PRS configuration information or the PRS change information for the UE from other actually available PRS resources, or reselect a positioning apparatus.

At the base station side, embodiments of the present application provides an apparatus for determining positioning reference signal (PRS) configuration information, the apparatus including:
a memory, configured to store program instructions; and
a processor, configured to invoke the program instructions stored in the memory, and perform according to an obtained program:
   receiving a message sent by a location management function (LMF); and
   obtaining PRS configuration information from the message; the PRS configuration information is determined by the LMF for a PRS resource allocation object based on preset available PRS configuration information.

Optionally, the processor is further configured to:
complete a corresponding resource configuration based on the PRS configuration information obtained from the message; and sent a feedback message to the LMF; the feedback message includes a configuration result of the resource configuration.

Optionally, the processor is further configured to: send configurable PRS resource information in a cell or a TRP to the LMF.

At the terminal side, embodiments of the present application provide an apparatus for determining positioning reference signal (PRS) configuration information, the apparatus including:
a memory, configured to store program instructions; and
a processor, configured to invoke the program instructions stored in the memory, and perform according to an obtained program:
   determining auxiliary information; the auxiliary information is configured to assist a location management function (LMF) to determine PRS configuration information for a PRS resource allocation object based on preset available PRS configuration information; and
   reporting the auxiliary information to the LMF.

Optionally, the auxiliary information includes one or more of following information:
a channel quality indication (CQI);
non line of sight (NLOS) related information;
a synchronization signal and physical broadcast channel block index (SSB index).

At the LMF side, embodiments of the present application provide another apparatus for determining positioning reference signal (PRS) configuration information, the apparatus including:
a first determining unit, configured to determine a positioning service requirement; and
a second determining unit, configured to determine PRS configuration information for a PRS resource allocation object based on preset available PRS configuration information according to the positioning service requirement.

At the base station side, embodiments of the present application provide another apparatus for determining positioning reference signal (PRS) configuration information, the apparatus including:
a receiving unit, configured to receive a message sent by a location management function (LMF); and
a determining unit, configured to obtain PRS configuration information from the message, the PRS configuration information is determined by the LMF for a PRS resource allocation object based on preset available PRS configuration information.

At the terminal side, embodiments of the present application provide another apparatus for determining positioning reference signal (PRS) configuration information, the apparatus including:
a determining unit, configured to determine auxiliary information; the auxiliary information is configured to assist a location management function (LMF) to determine PRS configuration information for a PRS resource allocation object based on preset available PRS configuration information; and
a reporting unit, configured to report the auxiliary information to the LMF.

Another embodiment of the present application provides a computing device, the computing device includes a memory and a processor; the memory is configured to store program instructions, and the processor is configured to invoke the program instructions stored in the memory, and perform any one the above methods according to an obtained program.

Another embodiment of the present application provides a computer storage medium, and the computer storage medium stores computer-executable instructions, and the computer-executable instructions are configured to cause a computer to perform any one of the above methods.

### Brief Description of Figures

In order to illustrate technical solutions of embodiments of the present application more clearly, drawings needing to be used in descriptions of embodiments will be introduced below briefly. Apparently, the drawings described below are only some embodiments of the present application, and those ordinarily skilled in the art can further obtain other drawings according to these drawings without inventive efforts.
FIG. 1 is a schematic diagram of transmission of ProvideAssistanceData message provided by an embodiment of the present application.
FIG. 2 is a schematic diagram of transmission of RequestAssistanceData message and ProvideAssistanceData message provided by an embodiment of the present application.
FIG. 3 is a schematic diagram of transmission of TPR information provided by an embodiment of the present application.
FIG. 4 is a schematic flow diagram of a method for determining PRS configuration information on an LMF side provided by an embodiment of the present application.
FIG. 5 is a schematic flow diagram of a method for determining PRS configuration information on a base station side provided by an embodiment of the present application.
FIG. 6 is a schematic flow diagram of a method for determining PRS configuration information on a terminal side provided by an embodiment of the present application.
FIG. 7 is a schematic structural diagram of an apparatus for determining PRS configuration information on an LMF side provided by an embodiment of the present application.
FIG. 8 is a schematic structural diagram of an apparatus for determining PRS configuration information on a base station side provided by an embodiment of the present application.
FIG. 9 is a schematic structural diagram of an apparatus for determining PRS configuration information on a terminal side provided by an embodiment of the present application.
FIG. 10 is a schematic structural diagram of another apparatus for determining PRS configuration information on an LMF side provided by an embodiment of the present application.
FIG. 11 is a schematic structural diagram of another apparatus for determining PRS configuration information on a base station side provided by an embodiment of the present application.
FIG. 12 is a schematic structural diagram of another apparatus for determining PRS configuration information on a terminal side provided by an embodiment of the present application.

### Detailed Description

The technical solutions in embodiments of the present application are clearly and completely described below in combination with drawings in embodiments of the present application. Apparently, embodiments described are merely some embodiments rather than all embodiments of the present application. On the basis of embodiments in the present application, all other embodiments obtained by those of ordinary skill in the art without making creative efforts fall within the scope of protection of the present application.

Embodiments of the present application provide a method and apparatus for determining PRS configuration information, for implementing a dynamic request for PRS configuration in combination with preconfigured available PRS configuration information, thereby improving network efficiency and ensuring positioning accuracy.

The method and the apparatus are based on the same application conception. Since principles of the method and the apparatus for solving problems are similar, implementations of the apparatus and the method may refer to each other, and repetitions are omitted.

Technical solutions provided in embodiments of the present application may be applied to various systems, especially 5G systems. For example, applicable systems may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, a LTE time division duplex (TDD), an universal mobile telecommunication system (UMTS), a worldwide interoperability for microwave access (WiMAX) system, a 5G system and a 5G NR system, etc. The various systems each include a terminal device and a network device.

The terminal device involved in embodiments of the present application may be referred to a device that provides voice and/or data connectivity to users, a handheld device with a wireless connection function, or other processing device connected to a wireless modem. In different systems, names of the terminal device may be different. For example, in the 5G system, the terminal device may be called user equipment (UE). The wireless terminal device may communicate with one or more core networks via a RAN, and the wireless terminal device may be a mobile terminal device such as a mobile phone (or referred to a "cellular" phone) and a computer with a mobile terminal device, for example, which may be portable, pocket, handheld, computer built-in or vehicle mounted mobile devices that exchange language and/or data with a radio access network. For example, a personal communication service (PCS) phone, a cordless phones, a session initiated protocol (SIP) phone, a wireless local loop (WLL) station, a personal digital assistant (PDA) and other devices. The wireless terminal device may also be referred to as a system, a subscriber unit, a subscriber station, a mobile station, a mobile, a remote station, an access point, a remote terminal, an access terminal, a user terminal, a user agent, and a user device, which are not limited in embodiments of the present application.

The network device involved in embodiments of the present application may be a base station, and the base station may include a plurality of cells. Depending on the specific application, the base station may also be referred to as an access point, or may refer to a device that communicates with the wireless terminal device through one or more sectors on an air interface in the access network, or other names. The network device may be configured to interconvert received air frames and internet protocol (IP) packets, and act as a router between the wireless terminal device and the rest of the access network, where the rest of the access network may include an internet protocol (IP) communication network. The network device may also coordinate attribute management for the air interface. For example, the network device involved in embodiments of the present application may be a base transceiver station (BTS) in a global system for mobile communications (GSM) or a code division multiple access (CDMA), or a network device (NodeB) in wide-band code division multiple access (WCDMA), or an evolutional node B (eNB or e-NodeB) in a long term evolution (LTE) system, or a 5G base station in 5G network architecture (a next generation system), a home evolved node B (HeNB), relay node (relay node), a home base station (femto), a pico base station (pico), etc., which are not limited in embodiments of the present application.

Various embodiments of the present application will be described in detail below with reference to the accompanying drawings. It should be noted that the display order of embodiments of the present application only represents the sequence of embodiments, and does not represent advantages and disadvantages of technical solutions provided by embodiments.

A configuration process of DL-PRS in R16 is described as follows.
(1). After acquiring a DL-PRS resource preconfigured by a base station from the base station, a location management function (LMF) configures a corresponding DL-PRS resource for a UE based on DL-PRS configuration information.

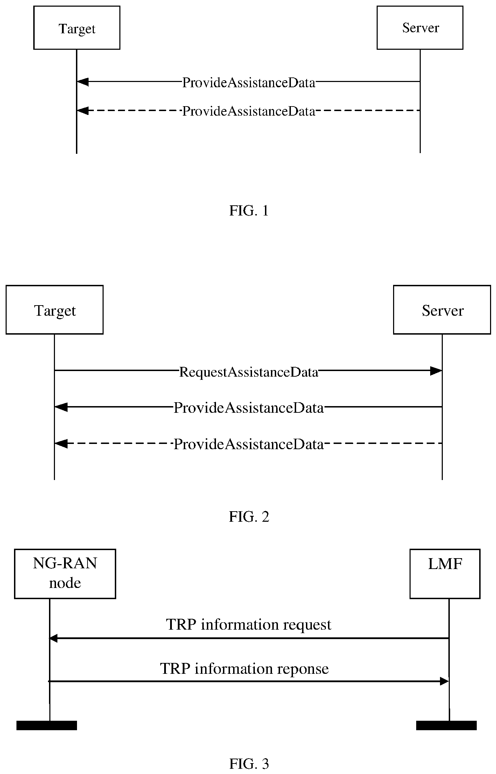

Each TRP of the base station is configured with a corresponding DL-PRS resource. When a positioning service arrives, the LMF acquires DL-PRS configuration information preconfigured by the base station from the base station. After the LMF acquires capability information of the base station, the LMF selects some DL-PRS resources from the DL-PRS configuration information, and uses the DL-PRS resources as part of positioning assistance data to send the DL-PRS resources to the UE through ProvideAssistanceData messages, as shown in the FIG. 1. Alternatively, after the LMF receives a RequestAssistanceData message from the UE, the LMF selects some DL-PRS resources from the DL-PRS configuration information, and uses the DL-PRS resources as part of positioning assistance data to send the DL-PRS resources to the UE through the ProvideAssistanceData messages, as shown in FIG. 2.

A. The LMF actively provides positioning assistance data information to the UE.

Step 1: The LMF actively sends a ProvideAssistanceData message carrying the DL-PRS configuration information to the UE.

B. The UE requests to obtain positioning assistance data information from the LMF.

Step 1: The UE sends a RequestAssistanceData message to the LMF.

Step 2: After receiving the RequestAssistanceData message, the LMF sends a ProvideAssistanceData message to respond to the UE, the ProvideAssistanceData carries the DL-PRS configuration information.

(2). The LMF acquires the DL-PRS resource preconfigured by the base station.

The base station configures a corresponding DL-PRS resource. When the LMF needs to obtain the DL-PRS resource configured by the base station, the LMF sends a TRP Information Request message to request to obtain the DL-PRS resource configured by the TRP under the base station, as shown in FIG. 3.

Step 1: The LMF sends a TRP Information Request message to the base station (e.g. NG-RAN node), to request to obtain the DL-PRS resources configured by the TRP under the base station.

Step 2: The base station sends a TRP Information Response message to the LMF, and the response message carries the PRS resource configuration information configured by different TRPs under the base station.

The positioning technology related to the downlink RAT is mainly based on the downlink positioning reference signal (DL-PRS) for measurement, and calculates and obtains corresponding position information according to measurement results. However, even if there is currently no positioning service or there is DL-PRS that is not used by a terminal, each TRP of a base station will still transmit all DL-PRS signals preconfigured by each TRP. In this case, PRS resources are wasted. In addition, when configuring the PRS, the TRP of the base station configures the PRS based on each cell, which may lead to insufficient positioning accuracy of a UE and result in positioning failure.

In technical solutions provided by embodiments of the present application, the LMF can trigger PRS configuration changes based on preconfigured available PRS configuration information, and further according to local policies and auxiliary information from a UE or other network nodes, so as to realize flexible and dynamic configuration of the DL-PRS, to improve network efficiency and ensure positioning accuracy. The preconfigured available PRS configuration information may be preconfigured and dynamically changeable PRS configuration information, that is, the PRS configuration information may be changed at any time as required, and is not fixed in advance.

The following are detailed descriptions from different device sides.

LMF side behaviors are as follows.

When there is a positioning service requirement (from a core network, such as the positioning service requirement sent by an access and mobility management function, AMF), for a cell or a TRP associated with the positioning service requirement, the LMF generates PRS configuration information for a UE based on preconfigured and dynamically changeable PRS configuration information (that is, the PRS configuration information may be updated at any time, and is not fixed in advance), according to local policies (which can be determined according to actual requirements, and are not limited in this application) and in combination with Quality of Service (QoS) requirements of the positioning service, such as, accuracy, delay etc., and sends the PRS configuration information to the UE through LTE Positioning Protocol (LPP), such as a provide assistance data message or other newly defined messages, the message includes at least one of the following (that is, the PRS configuration information includes at least one of the following):
an identifier (ID) of bandwidth part (BWP) corresponding to a dynamically configured DL-PRS resource;
an ID of a positioning frequency layer corresponding to the dynamically configured DL-PRS resource;
an ID of a base station corresponding to the dynamically configured DL-PRS resource;
an ID of a TRP corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource period;
a set of muting patterns of the dynamically configured DL-PRS resource.

It should be noted that, with regard to the dynamic configuration described in embodiments of the present application, the so-called dynamic is used to indicate that such a configuration can be dynamically changed, rather than being permanently fixed after one configuration, and the so-called configuration is used to indicate a behavior that a sender carries some parameters (any of the above-mentioned parameters) in a message, and a receiver completes a specified behavior according to these parameters. That is to say, the PRS configuration information described in embodiments of the present application is all dynamically changeable, is not fixed, and is used to instruct the receiver to perform a corresponding operation.

When the LMF decides to configure or change a PRS configuration resource of a cell or a TRP (that is, a PRS resource allocation object) related to preconfigured and dynamically changeable PRS configuration information based on the preconfigured and dynamically changeable PRS configuration information, the LMF generates PRS configuration information for the cell or the TRP, and send the PRS configuration information to a gNB through NR Positioning Protocol A (NRPPa), such as a POSITIONING INFORMATION REQUEST or other similar messages, the message includes at least one of the following (that is, the PRS configuration information includes at least one of the following):
an ID of BWP corresponding to an added DL-PRS resource, or a changed DL-PRS resource, or a deleted DL-PRS resource;
an ID of a positioning frequency layer corresponding the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS, such as an SSB-index; the SSB is a synchronization signal and a physical broadcast channel (PBCH) block (Synchronization Signal and PBCH block, SSB for short).

If LMF receives a NRPPa, such as a POSITIONING INFORMATION RESPONSE or other similar messages, sent by the gNB, then:
if information indicating success configuration or partial success configuration is returned, according to the information, PRS configuration information or PRS change information for the corresponding UE is selected from successfully configured PRS resources. The success configuration fed back from the base station may be complete success or partial success, for example: 10 RBs are configured, but only 5 RBs are configured successfully, but when selecting a PRB to be used, the PRB can only be selected from resources that are successfully configured; Change information is a change (including deletion or addition) relative to a previously configured resource, for example: PRB1, PRB2, PRB3 were previously configured, and the change information may be the deletion of PRB 2 or the addition of PRB 4.

If configuration failure information is returned, the PRS configuration information or PRS change information for the corresponding UE is selected from other actually available PRS resources, or other positioning methods (which may be determined according to actual requirements and are not limited in this application) are selected according to local policies (which may be determined according to actual requirements and are not limited in this application), etc.

Optionally, a location request message sent by the access and mobility management function (AMF) entity to the LMF includes priority information of the UE, so that the LMF may determine and configure appropriate PRS resources for the gNB and UE according to the priority information when dynamically configuring PRS resources.

Optionally, when the LMF decides to configure or change a PRS configuration resource for a cell or a TRP associated with per UE based on preconfigured and dynamically changeable PRS configuration information, the LMF generates PRS configuration information for Per UE (that is, each UE) associated with the cell or the TRP, and sends the PSR configuration information to the gNB through a NRPPa, such as a POSITIONING INFORMATION REQUEST or other similar messages, the message includes at least one of the following (that is, the PRS configuration information includes at least one of the following):
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the Per UE;
an ID of a TRP corresponding to the added DL-PRS resource, or the changed DL-PRS resource, or the deleted DL-PRS resource of the Per UE;
an ID of an added DL-PRS resource set, or a changed DL-PRS resource set, or a deleted DL-PRS resource set of the per UE;
an ID of the added DL-PRS resource or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource.

Optionally, the message further includes the priority information of the UE.

If LMF receives the NRPPa, such as a POSITIONING INFORMATION RESPONSE or other similar messages, sent by the gNB, then the LMF selects PRS configuration information or PRS change information for a corresponding UE from successfully configured PRS resources according to a PRS resource configuration result of the per UE carried in the message.

If configuration failure information is returned, the PRS configuration information or the PRS change information for the UE whose PRS resource configuration fails is selected from other actually available PRS resources, or other positioning methods (which may be determined according to actual requirements and are not limited in this application) are selected according to local policies (which may be determined according to actual requirements and are not limited in this application), etc.

Base station side behaviors are as follows.

After the base station receives the NRPPa, such as a POSITIONING INFORMATION REQUEST or other similar messages, sent by the LMF: optionally, the base station completes a corresponding resource configuration based on the PRS configuration information therein, and returns NRPPa, such as a POSITIONING INFORMATION RESPONSE or other similar messages, to the LMF, a configuration result of the PRS is indicated in the NRPPa.

The base station sends NRPPa, such as a TRP INFORMATION RESPONSE or other similar messages, to the LMF, and the message includes configurable PRS resource information in a corresponding cell or TRP.

Terminal side behaviors are as follows.

Auxiliary information is determined, and the auxiliary information is configured to assist an LMF to determine PRS configuration information for a PRS resource allocation object based on preset available PRS configuration information.

The auxiliary information is reported to the LMF.

Optionally, the auxiliary information includes one or more of following information:
a channel quality indication (CQI);
non line of sight (NLOS) related information;
a synchronization signal and physical broadcast channel block index (SSB index).

Descriptions of several specific embodiments are given below.

Embodiment 1: The LMF configures dynamically DL-PRS for a UE based on pre-configurable PRS resources.

Step 0: Based on an operation administration and maintenance (OAM) entity, or a TRP INFORMATION REQUEST or other similar messages from the gNB, the LMF obtains pre-configurable PRS resource information on the corresponding Cell or TRP.

Step 1: The LMF sends NRPPa, such as a POSITIONING INFORMATION REQUEST or other similar messages, to the base station, and the message includes at least one of the following:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or an changed DL-PRS resource set, or an deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS, such as an SSB-index.

Step 2: The LMF receives NRPPa, such as a POSITIONING INFORMATION RESPONSE or other similar messages, sent by the gNB, and prepares the PRS configuration resource for the UE according to a configuration result carried in the message.

Step 3: The LMF sends LPP, such as a ProvideAssistanceData message or other newly defined messages to the UE. The message include at least one of the following:
an ID of BWP corresponding to a dynamically configured DL-PRS resource;
an ID of a positioning frequency layer corresponding to the dynamically configured DL-PRS resource;
an ID of a base station corresponding to the dynamically configured DL-PRS resource;
an ID of a TRP corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times of the dynamically configured DL-PRS resource;
a set of muting patterns of the dynamically configured DL-PRS resource.

Step 4: The UE prepares to perform a corresponding positioning measurement according to a new PRS configuration resource in the message.

Embodiment 2: The LMF dynamically configures DL-PRS for per UE based on preconfigured available PRS resources.

Step 0: Based on the OAM, or a TRP INFORMATION RESPONSE or other similar messages from the gNB, the LMF obtains pre-configurable PRS resource information on the corresponding Cell or TRP.

Step 1: The LMF sends NRPPa, such as a POSITIONING INFORMATION REQUEST or other similar messages, to the base station to configure the PRS resource for per UE, and the message includes at least one of the following:
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or an changed DL-PRS resource set, or an deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource.

Optionally, the message further includes priority information of the UE.

Step 2: The LMF receives NRPPa, such as a POSITIONING INFORMATION RESPONSE or other similar messages, sent by the gNB, and prepares the PRS configuration resource for the UE according to a configuration result carried in the message.

Step 3: The LMF sends LPP, such as a ProvideAssistanceData message or other newly defined messages, to the UE. The message includes at least one of the following:
an ID of BWP corresponding to a dynamically configured DL-PRS resource;
an ID of a positioning frequency layer corresponding to the dynamically configured DL-PRS resource;
an ID of a base station corresponding to the dynamically configured DL-PRS resource;
an ID of a TRP corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times of the dynamically configured DL-PRS resource;
a set of muting patterns of the dynamically configured DL-PRS resource.

Step 4: The UE prepares to perform a corresponding positioning measurement according to a new PRS configuration resource in the message.

Embodiment 3: The UE reports auxiliary information, and the LMF triggers changes on the PRS configuration based on the auxiliary information of the UE.

Step 1: The UE sends information related to an environment and quality of a channel to the LMF through LPP, such as a ProvideAssistanceData message or other newly defined messages. The message includes at least one of the following:
a channel quality indication (CQI);
not line of sight ( NLOS) related information;
a recommended SSB index.

Step 2: The LMF triggers a method for changing the PRS configuration based on the auxiliary information of the UE, to realize flexible and dynamic configuration of the DL-PRS.

To sum up, in embodiments of the present application, the LMF can trigger the PRS configuration changes based on the preconfigured and dynamically changeable PRS configuration information, and further according to the local policy and auxiliary information from the UE or other network nodes, thereby realizing flexible and dynamic configuration of DL-PRS, to improve network efficiency and ensure positioning accuracy.

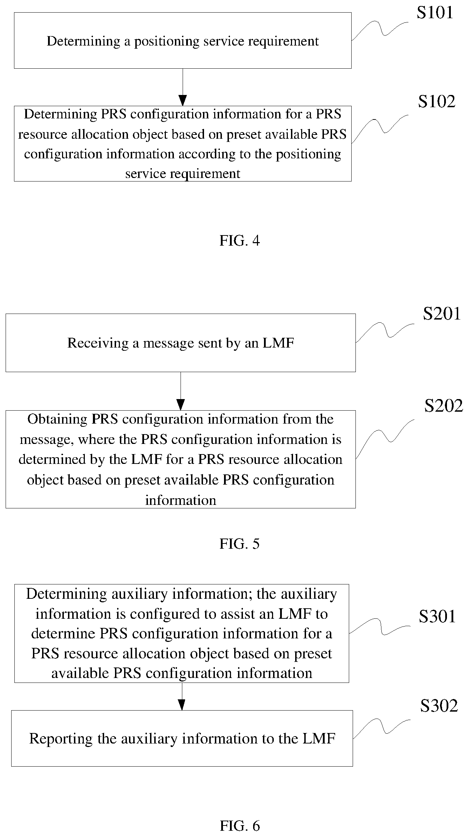

On the LMF side, referring to FIG. 4 , a method for determining positioning reference signal (PRS) configuration information provided by embodiments of the present application includes:
S101: determining a positioning service requirement; and
S102: determining PRS configuration information for a PRS resource allocation object based on preset available PRS configuration information according to the positioning service requirement.

The available PRS configuration information may be PRS configuration information that can be changed dynamically.

The PRS resource allocation object may be, for example, a cell, a TRP or a UE.

Optionally, the PRS resource allocation object is a user equipment (UE), and the PRS configuration information (which may be the preset available PRS configuration information, or PRS configuration information determined for the PRS resource allocation object) includes one or more following information:
an identifier (ID) of bandwidth part (BWP) corresponding to a dynamically configured downlink positioning reference signal (DL-PRS) resource;
an ID of a positioning frequency layer corresponding to the dynamically configured DL-PRS resource;
an ID of a base station corresponding to the dynamically configured DL-PRS resource;
an ID of a transmission point (TRP) corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource periods;
a set of muting patterns of the dynamically configured DL-PRS resource.

Optionally, the PRS resource allocation object is a cell or a transmission point (TRP), and the PRS configuration information includes one or more of following information:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS.

Optionally, the method further includes:
notifying the PRS configuration information determined for the PRS resource allocation object to a base station;
when a feedback message received from the base station includes information that PRS resources are configured successfully or part of the PSR resources are configured successfully, selecting PRS configuration information or PRS change information for a UE from successfully configured PRS resources according to the information that PRS resources are configured successfully or part of the PSR resources are configured successfully; and
when the feedback message received from the base station includes information that the PRS resources fail to be configured, selecting the PRS configuration information or the PRS change information for the UE from other actually available PRS resources, or reselecting a positioning method.

Optionally, when a positioning request message sent by an access and mobility management function (AMF) entity to a location management function (LMF) entity includes priority information of the UE, the determining the PRS configuration information for the PRS resource allocation object includes:
determining the PRS configuration information for the PRS resource allocation object according to the priority information.

Optionally, the PRS resource allocation object is a cell or a TRP, a PRS configuration resource is configured or changed for a cell or a TRP associated with per UE, and the PRS configuration information for each UE of the cell or the TRP is determined and is notified to a base station through a message.

Optionally, the message includes one or more of following information:
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or a changed DL-PRS resource set, or a deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource;
priority information of the UE.

Optionally, the method further includes:
when receiving a feedback message from the base station, selecting PRS configuration information or PRS change information for a corresponding UE from successfully configured PRS resources according to a configuration result of a PRS resource of the per UE carried in the feedback message; and
when the feedback message includes information that the PRS resources fail to be configured, selecting the PRS configuration information or the PRS change information for the UE from other actually available PRS resources, or reselecting a positioning method.

On the base station side, referring to FIG. 5 , a method for determining positioning reference signal (PRS) configuration information of provided by embodiments of the present application includes:
S201: receiving a message sent by an LMF; and
S202: obtaining PRS configuration information from the message, where the PRS configuration information is determined by the LMF for a PRS resource allocation object based on preset available PRS configuration information.

Optionally, the method further includes:
completing a corresponding resource configuration based on the PRS configuration information obtained from the message, and sending a feedback message to the LMF; the feedback message includes a configuration result of the resource configuration.

Optionally, the method further includes:
sending configurable PRS resource information in a cell or a TRP to the LMF to assist the LMF to configure a PRS resource.

On the terminal side, referring to FIG. 6 , a method for determining positioning reference signal (PRS) configuration information provided by embodiments of the present application includes:
S301: determining auxiliary information; the auxiliary information is configured to assist an LMF to determine PRS configuration information for a PRS resource allocation object based on preset available PRS configuration information; and
S302: reporting the auxiliary information to the LMF.

Optionally, the auxiliary information includes one or more of following information:
a channel quality indication (CQI);
non line of sight (NLOS) related information;
a synchronization signal and physical broadcast channel block index (SSB index).

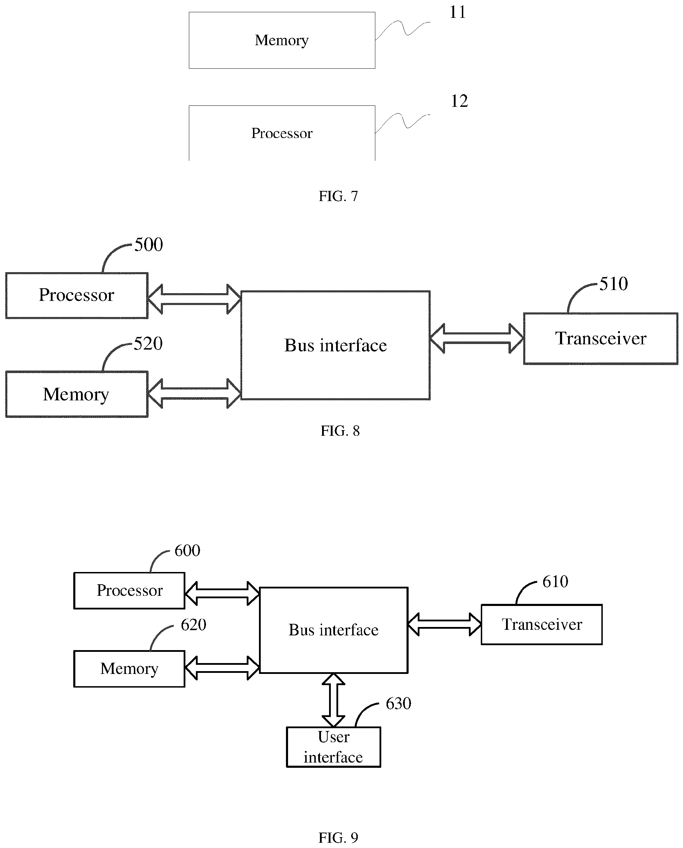

On the LMF side, referring to FIG. 7, an apparatus for determining positioning reference signal (PRS) configuration information provided by embodiments of the present application includes:
a memory 11, configured to store program instructions;
a processor 12, configured to invoke the program instructions stored in the memory, and perform according to an obtained program:
   determining a positioning service requirement;
   determining PRS configuration information for a PRS resource allocation object based on preset available PRS configuration information according to the positioning service requirement.

Optionally, the PRS resource allocation object is a user equipment (UE), and the PRS configuration information includes one or more of following information:
an identifier (ID) of bandwidth part (BWP) corresponding to a dynamically configured downlink positioning reference signal (DL-PRS) resource;
an ID of a positioning frequency layer corresponding to the dynamically configured DL-PRS resource;
an ID of a base station corresponding to the dynamically configured DL-PRS resource;
an ID of a transmission point (TRP) corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource period;
a set of muting patterns of the dynamically configured DL-PRS resource.

Optionally, the PRS resource allocation object is a cell or a TRP, and the PRS configuration information includes one or more of following information:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS.

Optionally, the processor 12 is further configured to:
notify the PRS configuration information determined for the PRS resource allocation object to a base station;
when the feedback message received from the base station includes information that PRS resources are configured successfully or part of the PSR resources are configured successfully, select PRS configuration information or PRS change information for a UE from successfully configured PRS resources according to the information that PRS resources are configured successfully or part of the PSR resources are configured successfully; and
when the feedback message received from the base station includes information that the PRS resources fail to be configured, select the PRS configuration information or the PRS change information for the UE from other actually available PRS resources, or reselect a positioning apparatus.

Optionally, in a case that a positioning request message sent by an access and mobility management function (AMF) entity to a location management function (LMF) entity includes priority information of a UE, the determining the PRS configuration information for the PRS resource allocation object includes:
determining the PRS configuration information for the PRS resource allocation object according to the priority information.

Optionally, the PRS resource allocation object is a cell or a TRP, a PRS configuration resource is configured or changed for a cell or a TRP associated with per UE, and the PRS configuration information for each UE of the cell or the TRP is determined and is notified to a base station through a message.

Optionally, the message includes one or more of following information:
an ID of BWP corresponding to an added downlink positioning reference signal (DL-PRS) resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or a changed DL-PRS resource set, or a deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource;
priority information of the UE.

Optionally, the processor 12 is further configured to:
when receiving a feedback message from the base station, select PRS configuration information or PRS change information for a corresponding UE from successfully configured PRS resources according a configuration result of a PRS resource of the per UE carried in the feedback message; and
when the feedback message includes information that the PRS resources fail to be configured, select the PRS configuration information or the PRS change information for the UE from other actually available PRS resources, or reselect a positioning apparatus.

On the base station side, referring to FIG. 8, an apparatus for determining positioning reference signal (PRS) configuration information provided by embodiments of the present application includes:
a memory 520, configured to store program instructions; and
a processor 500, configured to invoke the program instructions stored in the memory, and perform according to an obtained program:
   receiving a message sent by an LMF; and
   obtaining PRS configuration information from the message, where the PRS configuration information is determined by the LMF for a PRS resource allocation object based on preset available PRS configuration information.

Optionally, the processor 500 is further configured to:
complete a corresponding resource configuration based on the PRS configuration information obtained from the message, and sent a feedback message to the LMF; the feedback message includes a configuration result of the resource configuration.

Optionally, the processor 500 is further configured to:
send configurable PRS resource information in a cell or a TRP to the LMF.

A transceiver 510 is configured for receiving and sending data under control of the processor 500.

In FIG. 8, a bus architecture may include any quantity of interconnected buses and bridges, which are linked together by one or more processors represented by the processor 500 and various circuits of the memory represented by the memory 520. The bus architecture may further link various other circuits, such as a peripheral device, a voltage regulator, and a power management circuit, which are well known in the art and therefore are not further described herein. The bus interface provides an interface. Transceiver 510 may be a plurality of components, namely, the transceiver may include a transmitter and a transceiver, and provide a unit configured to be in communication with various other devices over a transmission medium. The processor 500 is responsible for managing the bus architecture and general processing, and the memory 520 may store data used by the processor 500 during performing operations.

The processor 500 may be a central processing unit (CPU), an application specific integrated circuit (ASIC), a field-programmable gate array (FPGA) or a complex programmable logic device (CPLD).

On the terminal side, referring to FIG. 9, an apparatus for determining positioning reference signal (PRS) configuration information provided by embodiments of the present application includes:
a memory 620, configured to storing program instructions; and
a processor 600, configured to invoke the program instructions stored in the memory, and execute according an obtained program:
   determining auxiliary information; the auxiliary information is configured to assist an LMF to determine PRS configuration information for a PRS resource allocation object based on preset available PRS configuration information; and
   reporting the auxiliary information to the LMF.

Optionally, the auxiliary information includes one or more of following information:
a channel quality indication (CQI);
non line of sight (NLOS) related information;
a synchronization signal and physical broadcast channel block index (SSB index).

A transceiver 610 is configured for receiving and transmitting data under the control of the processor 600.

In FIG. 9, a bus architecture may include any quantity of interconnected buses and bridges, which are linked together by one or more processors represented by processor 600 and various circuits of memory represented by memory 620. The bus architecture may further link various other circuits, such as a peripheral device, a voltage regulator, and a power management circuit, which are well known in the art and therefore are not further described herein. A bus interface provides an interface. The transceiver 610 may be a plurality of components, namely, the transceiver may include a transmitter and a transceiver, and provide a unit configured to be in communication with various other devices over a transmission medium. For different user equipments, a user interface 630 may further be an interface capable of being externally connected with required equipment, and the connected equipment includes, but is not limited to a keypad, a display, a loudspeaker, a microphone, a joystick, etc.

The processor 600 is responsible for managing the bus architecture and general processing, and the memory 620 may store data used by the processor 600 during performing operations.

Optionally, the processor 600 may be a central processing unit (CPU), an application specific integrated circuit (ASIC), a field-programmable gate array (FPGA) or a complex programmable logic device (CPLD).

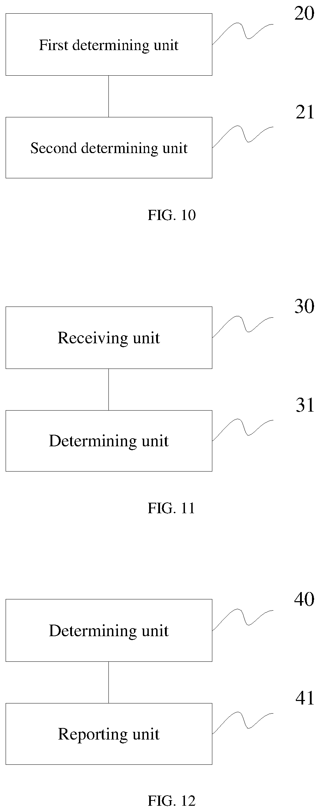

On the LMF side, referring to FIG. 10, another apparatus for determining positioning reference signal (PRS) configuration information provided by embodiments of the present application includes:
a first determining unit 20, configured to determine a positioning service requirement; and
a second determining unit 21, configured to determine PRS configuration information for a PRS resource allocation object based on preset available PRS configuration information according to the positioning service requirement.

The above second determining unit 21 also has the function of performing other specific processes of the above LMF side method, which will not be repeated here.

On the base station side, referring to FIG. 11, another apparatus for determining positioning reference signal (PRS) configuration information provided by embodiments of the present application includes:
a receiving unit 30, configured to receive a message sent by the LMF; and
a determining unit 31, configured to obtain PRS configuration information from the message, where the PRS configuration information is determined by the LMF for a PRS resource allocation object based on preset available PRS configuration information.

The above determining unit 31 also has the function of performing other specific processes of the above base station side method, which will not be repeated here.

On the terminal side, referring to FIG. 12 , another apparatus for determining positioning reference signal (PRS) configuration information provided by embodiments of the present application includes:
a determining unit 40, configured to determine auxiliary information; the auxiliary information is configured to assist an LMF to determine PRS configuration information for a PRS resource allocation object based on preset available PRS configuration information; and
a reporting unit 41, configured to report the auxiliary information to the LMF.

It should be noted that the division of units in embodiments of the present application is illustrative, and is only a logical function division, and other division methods may be used in actual implementation. In addition, each functional unit in embodiments of the present application may be integrated into one processing unit, or each unit may exist physically separately, or two or more units may be integrated into one unit. The above-mentioned integrated units may be implemented in the form of hardware, or may be implemented in the form of software functional units.

The integrated unit may be stored in a computer-readable storage medium if the integrated unit is implemented in the form of a software functional unit and sold or used as an independent product. Based on this understanding, technical solutions of the present application can be embodied in the form of software products in essence, or the parts that contribute to the prior art, or all or part of the technical solutions, and the computer software products are stored in a storage medium, including several instructions for causing a computer device (which may be a personal computer, a server, or a network device, etc.) or a processor to execute all or part of the steps of the methods described in various embodiments of the present application. The aforementioned storage medium includes: a U disk, a mobile hard disk, a read-only memory (ROM), a random access memory (RAM), a magnetic disk or an optical disk and other media that can store program codes.

Embodiments of the present application provide a computing device, and the computing device may be a desktop computer, a portable computer, a smart phone, a tablet computer, a personal digital assistant (PDA), and the like. The computing device may include a central processing unit (CPU), a memory, an input/output device, etc., the input device may include a keyboard, a mouse, a touch screen, etc., and the output device may include a display device, such as a liquid crystal display (LCD), a cathode ray tube (CRT), etc.

The memory may include a read only memory (ROM) and a random access memory (RAM) and provide a processor with program instructions and data stored in the memory. In embodiments of the present application, the memory may be used to store the program of any of the methods provided in embodiments of the present application.

The processor invokes the program instructions stored in the memory, and the processor is configured to execute any one of the methods provided in embodiments of the present application according to the obtained program instructions.

Embodiments of the present application provide a computer storage medium for storing computer program instructions used for the apparatuses provided by the above embodiments of the present application, which includes a program for executing any of the methods provided by the above embodiments of the present application.

The computer storage medium can be any available medium or data storage device that can be accessed by a computer, including but not limited to the magnetic storage (e.g. a floppy disk, a hard disk, a magnetic tape, a magneto-optical disk (MO), etc.), an optical storage (such a CD, a DVD, a BD, an HVD, etc.), as well as a semiconductor memory (e.g. ROM, EPROM, EEPROM, a non-volatile memory (NAND FLASH), a solid-state disk (SSD)), and the like.

The methods provided in embodiments of the present application may be applied to the terminal equipment, and may also be applied to the network equipment.

The terminal equipment may also be referred to as a user equipment (UE for short), a mobile station (MS for short), a mobile terminal, etc. Optionally, the terminal may be have the ability to communicate with one or more core networks via a radio access network (RAN), for example, the terminal may be a mobile phone (or a "cellular" phone), or a computer with a mobile nature, etc., for example, the terminal may also be a portable mobile device, a pocket-sized mobile device, a hand-held mobile device, a computer-built mobile device, or a vehicle-mounted mobile device.

The network equipment, which may be a base station (e.g. an access point), refers to a device in an access network that communicates with wireless terminals over an air interface through one or more sectors. The base station may be configured to interconvert received air frames and internet protocol (IP) packets, and act as a router between the wireless terminal and the rest of the access network, where the rest of the access network may include an internet protocol (IP) network. The base station may also coordinate attribute management of the air interface. For example, the base station may be a base transceiver station (BTS) in GSM or CDMA, or a NodeB in WCDMA, or an evolutional Node (NodeB or eNB or e-NodeB,) in the LTE, or a gNB in the 5G system, etc., which is not limited in embodiments of the present application.

The processing flow of the above method can be implemented by a software program, and the software program can be stored in a storage medium, and when the stored software program is called, the above method steps are executed.

Those skilled in the art should understand that embodiments of the present application can be provided as methods, systems or computer program products. Therefore, the present application can adopt forms of full hardware embodiments, full software embodiments, or embodiments combining software and hardware aspects. Moreover, the present application can adopt a form of the computer program products implemented on one or more computer available storage mediums (including but not limited to a disk memory, an optical memory and the like) containing computer available program codes.

The present application is described with reference to flow charts and/or block diagrams of the methods, the equipment (systems), and the computer program products according to embodiments of the present application. It should be understood that each flow and/or block in the flow charts and/or the block diagrams and combinations of the flows and/or the blocks in the flow charts and/or the block diagrams can be implemented by computer program instructions. The computer program instructions may be provided to a processor of a general-purpose computer, a special-purpose computer, an embedded processing machine or other programmable data processing equipment, thereby generating a machine, such that the instructions, when executed by the processor of the computers or other programmable data processing equipment, generate devices for implementing functions specified in one or more flows in the flow charts and/or one or more blocks in the block diagrams.

The computer program instructions may also be stored in a computer readable memory which can guide the computers or other programmable data processing equipment to work in a specific mode, thus the instructions stored in the computer readable memory generates an article of manufacture that includes a commander device that implement the functions specified in one or more flows in the flow charts and/or one or more blocks in the block diagrams.

The computer program instructions may also be loaded to the computers or other programmable data processing equipment, so that a series of operating steps may be executed on the computers or other programmable equipment to generate computer-implemented processing, such that the instructions executed on the computers or other programmable equipment provide steps for implementing the functions specified in one or more flows in the flow charts and/or one or more blocks in the block diagrams.

Obviously, those skilled in the art can make various modifications and variations to the present application without departing from the spirit and scope of the present application. In this way, if these modifications and variations of the present application fall within the scope of the claims of the present application and their equivalent art, the present application also intends to include these modifications and variations.

## Claims

1. A method for determining positioning reference signal, PRS, configuration information, the method comprising:
determining a positioning service requirement; and
determining PRS configuration information for a PRS resource allocation object based on preset available PRS configuration information according to the positioning service requirement.

2. The method according to claim 1, wherein the PRS resource allocation object is a user equipment, UE, and the PRS configuration information comprises one or more of following information:
an identifier, ID, of bandwidth part, BWP, corresponding to a dynamically configured downlink positioning reference signal, DL-PRS, resource;
an ID of a positioning frequency layer corresponding to the dynamically configured DL-PRS resource;
an ID of a base station corresponding to the dynamically configured DL-PRS resource;
an ID of a transmission point, TRP, corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource periods;
a set of muting patterns of the dynamically configured DL-PRS resource.

3. The method according to claim 1, wherein the PRS resource allocation object is a cell or a TRP, and the PRS configuration information comprises one or more of following information:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS.

4. The method according to claim 1, wherein in a case that a positioning request message sent by a access and mobility management function, AMF, entity to a location management function entity, LMF, comprises priority information of a UE, the determining the PRS configuration information for the PRS resource allocation object comprises:
determining the PRS configuration information for the PRS resource allocation object according to the priority information.

5. The method according to claim 1, wherein the PRS resource allocation object is a cell or a TRP, a PRS configuration resource is configured or changed for a cell or a TRP associated with per UE, and PRS configuration information for each UE of the cell or the TRP is determined and is notified to a base station through a message.

6. The method according to claim 5, wherein the message comprises one or more of following information:
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or a changed DL-PRS resource set, or a deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource;
priority information of the UE.

7. The method according to any one of claims 3-6, wherein the method further comprises:
notifying the PRS configuration information determined for the PRS resource allocation object to a base station.

8. The method according to claim 7, wherein the method further comprises:
when a feedback message received from the base station comprises information that PRS resources are configured successfully or part of the PSR resources are configured successfully, selecting PRS configuration information or PRS change information for a UE from successfully configured PRS resources according to the information that the PRS resources are configured successfully or the part of the PSR resources are configured successfully; and
when the feedback message received from the base station comprises information that the PRS resources fail to be configured, selecting the PRS configuration information or the PRS change information for the UE from other actually available PRS resources, or reselecting a positioning method.

9. A method for determining positioning reference signal, PRS, configuration information, the method comprising:
receiving a message sent by a location management function, LMF; and
obtaining PRS configuration information from the message, wherein the PRS configuration information is determined by the LMF for a PRS resource allocation object based on preset available PRS configuration information.

10. The method according to claim 9, wherein the method further comprises:
completing a corresponding resource configuration based on the PRS configuration information obtained from the message, and
sending a feedback message to the LMF; wherein the feedback message comprises a configuration result of the resource configuration.

11. The method according to claim 9, wherein the method further comprises:
sending configurable PRS resource information in a cell or a TRP to the LMF.

12. A method for determining positioning reference signal, PRS, configuration information, the method comprising:
determining auxiliary information; wherein the auxiliary information is configured to assist a location management function, LMF, to determine PRS configuration information for a PRS resource allocation object based on preset available PRS configuration information; and
reporting the auxiliary information to the LMF.

13. The method according to claim 12, wherein the auxiliary information comprises one or more of following information:
a channel quality indication, CQI;
non line of sight, NLOS, related information;
a synchronization signal and physical broadcast channel block index, SSB index.

14. An apparatus for determining positioning reference signal, PRS, configuration information, the apparatus comprising:
a memory, configured to store program instructions; and
a processor, configured to invoke the program instructions stored in the memory, and perform according to an obtained program:
determining a positioning service requirement; and
determining PRS configuration information for a PRS resource allocation object based on preset available PRS configuration information according to the positioning service requirement.

15. The apparatus according to claim 14, wherein the PRS resource allocation object is a user equipment, UE, and the PRS configuration information comprises one or more of following information:
an identifier, ID, of bandwidth part, BWP, corresponding to a dynamically configured downlink positioning reference signal, DL-PRS, resource;
an ID of a positioning frequency layer corresponding to the dynamically configured DL-PRS resource;
an ID of a base station corresponding to the dynamically configured DL-PRS resource;
an ID of a transmission point, TRP, corresponding to the dynamically configured DL-PRS resource;
an ID of a dynamically configured DL-PRS resource set;
an ID of the dynamically configured DL-PRS resource;
a set of dynamically configured DL-PRS resource periods;
a set of repetition times used by the dynamically configured DL-PRS resource period;
a set of muting patterns of the dynamically configured DL-PRS resource.

16. The apparatus according to claim 14, wherein the PRS resource allocation object is a cell or a TRP, and the PRS configuration information comprises one or more of following information:
an ID of BWP corresponding to an added DL-PRS resource, or a changed DL-PRS resource, or a deleted DL-PRS resource;
an ID of a positioning frequency layer corresponding to the added DL-PRS resource, or the changed DL-PRS resource, or the deleted DL-PRS resource;
an ID of a base station corresponding to the added DL-PRS resource, or the changed DL-PRS resource, or the deleted DL-PRS resource;
an ID of a TRP corresponding to the added DL-PRS resource, or the changed DL-PRS resource, or the deleted DL-PRS resource;
an ID of an added DL-PRS resource set, or a changed DL-PRS resource set, or a deleted DL-PRS resource set;
an ID of the added DL-PRS resource, or the changed DL-PRS resource, or the deleted DL-PRS resource;
a set of added DL-PRS resource periods, or changed DL-PRS resource periods, or deleted DL-PRS resource periods;
a set of repetition times of the added DL-PRS resource, or the changed DL-PRS resource, or the deleted DL-PRS resource;
a set of muting patterns of the added DL-PRS resource, or the changed DL-PRS resource, or the deleted DL-PRS resource;
a beam direction for transmitting a changed PRS.

17. The apparatus according to claim 14, wherein in a case that a positioning request message sent by an access and mobility management function, AMF, entity to a location management function, LMF, comprises priority information of a UE, the determining the PRS configuration information for the PRS resource allocation object comprises:
determining the PRS configuration information for the PRS resource allocation object according to the priority information,.

18. The apparatus according to claim 14, wherein the PRS resource allocation object is a cell or a TRP, a PRS configuration resource is configured or changed for a cell or a TRP associated with per UE, and PRS configuration information of each UE is determined and is notified to a base station through a message.

19. The apparatus according to claim 18, wherein the message comprises one or more of following information:
an ID of BWP corresponding to an added DL-PRS resource, or a changed DL-PRS resource, or a deleted DL-PRS resource of per UE;
an ID of a positioning frequency layer corresponding to the added DL-PRS resource, or the changed DL-PRS resource, or the deleted DL-PRS resource of the per UE;
an ID of a base station corresponding to the added DL-PRS resource, or the changed DL-PRS resource, or the deleted DL-PRS resource of the per UE;
an ID of a TRP corresponding to the added DL-PRS resource, or the changed DL-PRS resource, or the deleted DL-PRS resource of the per UE;
an ID of an added DL-PRS resource set, or a changed DL-PRS resource set, or a deleted DL-PRS resource set of the per UE;
an ID of the added DL-PRS resource, or the changed DL-PRS resource, or the deleted DL-PRS resource of the per UE;
a set of added DL-PRS resource periods, or changed DL-PRS resource periods, or deleted DL-PRS resource periods of the per UE;
a set of repetition times of the added DL-PRS resource, or the changed DL-PRS resource, or the deleted DL-PRS resource of the per UE;
a set of muting patterns of the added DL-PRS resource, or the changed DL-PRS resource, or the deleted DL-PRS resource;
priority information of the UE.

20. The apparatus according to any one of claims 16-19, wherein the processor is further configured to:
notify the PRS configuration information determined for the PRS resource allocation object to a base station.

21. The apparatus according to claim 20, wherein the processor is further configured to:
when a feedback message received from the base station comprises information that PRS resources are configured successfully or part of the PSR resources are configured successfully, select PRS configuration information or PRS change information for a UE from successfully configured PRS resources according to the information that the PRS resources are configured successfully or part of the PSR resources are configured successfully; and
when the feedback message comprises information that the PRS resources fail to be configured, select the PRS configuration information or the PRS change information for the UE from other actually available PRS resources, or reselect a positioning apparatus.

22. An apparatus for determining positioning reference signal, PRS, configuration information, the apparatus comprising:
a memory, configured to store program instructions; and
a processor, configured to invoke the program instructions stored in the memory, and perform according to an obtained program:
receiving a message sent by a location management function, LMF; and
obtaining PRS configuration information from the message, wherein the PRS configuration information is determined by the LMF for a PRS resource allocation object based on preset available PRS configuration information.

23. The apparatus according to claim 22, wherein the processor is further configured to:
complete a corresponding resource configuration based on the PRS configuration information obtained from the message; and
sent a feedback message to the LMF; wherein the feedback message comprises a configuration result of the resource configuration.

24. The apparatus according to claim 22, wherein the processor is further configured to:
send configurable PRS resource information in a cell or a TRP to the LMF.

25. An apparatus for determining positioning reference signal, PRS, configuration information, the apparatus comprising:
a memory, configured to store program instructions; and
a processor, configured to invoke the program instructions stored in the memory, and perform according to an obtained program:
determining auxiliary information; wherein the auxiliary information is configured to assist a location management function, LMF, to determine PRS configuration information for a PRS resource allocation object based on preset available PRS configuration information; and
reporting the auxiliary information to the LMF.

26. The apparatus according to claim 25, wherein the auxiliary information comprises one or more of following information:
a channel quality indication, CQI;
non line of sight, NLOS, related information;
a synchronization signal and physical broadcast channel block index, SSB index.

27. An apparatus for determining positioning reference signal, PRS, configuration information, the apparatus comprising:
a first determining unit, configured to determine a positioning service requirement; and
a second determining unit, configured to determine PRS configuration information for a PRS resource allocation object based on preset available PRS configuration information according to the positioning service requirement.

28. An apparatus for determining positioning reference signal, PRS, configuration information, the apparatus comprising:
a receiving unit, configured to receive a message sent by a location management function, LMF; and
a determining unit, configured to obtain PRS configuration information from the message, wherein the PRS configuration information is determined by the LMF for a PRS resource allocation object based on preset available PRS configuration information.

29. An apparatus for determining positioning reference signal, PRS, configuration information, the apparatus comprising:
a determining unit, configured to determine auxiliary information, wherein the auxiliary information is configured to assist a location management function, LMF, to determine PRS configuration information for a PRS resource allocation object based on preset available PRS configuration information; and
a reporting unit, configured to report the auxiliary information to the LMF.

30. A computer storage medium, wherein the computer storage medium stores a computer-executable instruction configured to cause a computer to perform the method according to any one according to claims 1 to 13.
